Europäisches Patentamt

European Patent Office

Office européen des brevets

(19)

(11) EP 1 589 075 A1

(12) EUROPEAN PATENT APPLICATION
published in accordance with Art. 158(3) EPC

(43) Date of publication:
26.10.2005 Bulletin 2005/43

(51) Int Cl.7: C08L 101/00, C08L 101/16,
C08L 67/04, C08K 5/10

(21) Application number: 04706785.5

(22) Date of filing: 30.01.2004

(86) International application number:
PCT/JP2004/000885

(87) International publication number:
WO 2004/067639 (12.08.2004 Gazette 2004/33)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 30.01.2003 JP 2003022570
25.09.2003 JP 2003333089

(71) Applicant: ARAKAWA CHEMICAL INDUSTRIES,
LTD.
Osaka-shi, Osaka 541-0046 (JP)

(72) Inventors:
• TAKEDA, Shoji,
R&D Ctr. of Arakawa Chem. Ind. Ltd.
Osaka-shi, Osaka 538-0053 (JP)
• NISHIMURA, Koji,
R&D Ctr. Arakawa Chem. Ind. Ltd.
Osaka-shi, Osaka 538-0053 (JP)

(74) Representative: Müller-Boré & Partner
Patentanwälte
Grafinger Strasse 2
81671 München (DE)

(54) PLASTICIZER FOR RESIN AND RESIN COMPOSITION

(57) The present invention provides a resin plasticizer comprising a compound represented by Formula (1):

$$R^1\text{-}(O\text{-}R^2\text{-}CO)_k\text{-}O\text{-}[(CHR^3)_p(CHR^4)_q\text{-}O]_r[(CHR^5)_{p'}(CHR^6)_{q'}\text{-}O]_{r'}\text{-}R^7$$

wherein $R^1$ is a hydrogen atom or a $C_{2\text{-}20}$ acyl group; $R^2$ is a hydroxycarboxylic acid residue; each $R^3$, $R^4$, $R^5$ and $R^6$ is independently a hydrogen atom or a methyl group; $R^7$ is a $C_{1\text{-}8}$ alkyl or $C_{2\text{-}20}$ acyl group; k is an integer from 1 to 60; each p, p', q and q' is an integer from 0 to 6, provided that $1 \leq p+q \leq 6$ and $1 \leq p'+q' \leq 6$; and each r and r' is an integer from 0 to 7, provided that $1 \leq r+r' \leq 7$; a resin composition comprising the plasticizer; and a molded article formed from the resin composition.

EP 1 589 075 A1

## EP 1 589 075 A1

**Description**

TECHNICAL FIELD

The present invention relates to a plasticizer for resins, a resin composition containing the plasticizer, and molded articles formed from the resin composition.

BACKGROUND ART

Plasticizers are usually used in molded articles formed from various thermoplastic resins such as polyesters, polyolefins, polyamides, polyacetals, vinyl-based resins, styrene-based resins, acryl-based resins, and cellulose-based resins to impart flexibility, durability, low-temperature resistance, electrical properties, and other characteristics.

Examples of known such plasticizers are phthalic acid-based plasticizers, fatty acid-based plasticizers, phosphoric acid-based plasticizers, polyester-based plasticizers, and the like.

Thermoplastic resins are used in a variety of applications, e.g., building materials, packaging materials, and other items, due to the ease of molding and the light weight of articles formed therefrom. However, such thermoplastic resins suffer from drawbacks: (1) additives used during molding raise safety concerns, (2) the high heats of combustion upon incineration damage incineration plants, and (3) such resins are hardly biodegradable in the natural environment, entailing great environmental burdens.

A variety of biodegradable plastics have been proposed as resins that can solve the aforementioned problems, and some are already in commercial production. In particular, polylactic acid, a type of polyester, has been attracting attention due to its relatively high transparency. Heretofore, the use of polylactic acid has been confined to a limited number of technical fields, such as medicine, due to its production costs, the lack of flexibility of articles formed therefrom, and other reasons.

With respect to the production costs of polylactic acid, reduction is expected because starting material lactic acid can now be inexpensively produced according to fermentation methods in conjunction with the operation of large-scale commercial plants.

In contrast, with respect to the flexibility of articles formed from polylactic acid, while some improvements have been achieved by the use of the aforementioned conventional plasticizers, problems are still encountered, such as insufficient plasticizing effects, plasticizer bleeding, etc. Moreover, those that are highly safe and incur minimal environmental burdens are required as plasticizers usable for biodegradable plastics such as polylactic acid.

WO94/06856 discloses compositions prepared by incorporating, as plasticizers that meet the aforementioned requirements, derivatives of oligomeric lactic acid esters in polylactic acid-based resins; lactic acid is a type of hydroxycarboxylic acid. However, the transparency, bleeding resistance and flexibility of articles formed from such resin compositions are not sufficient. Moreover, due to the presence of a low flash point component, i.e., methyl lactate, in the aforementioned derivatives of oligomeric lactic acid esters, there is a concern about the risk of ignition of the low flash point component evaporated during molding operations.

DISCLOSURE OF THE INVENTION

An object of the invention is to provide a resin plasticizer which has high compatibility with various resins, imparts excellent plasticizing effects and bleeding resistance to molded resin articles, and is of excellent safety by virtue of little possibility of ignition during resin molding due to the absence of the low flash point component methyl lactate.

Another object of the invention is to provide a resin composition usable for producing molded articles having excellent transparency, flexibility, and other such properties using the plasticizer.

Other objects and characteristics of the present invention will become evident by the disclosure provided below.

The inventors conducted extensive research to develop a novel plasticizer for resins, and as a result, found that a specific compound having a moiety derived from a hydroxycarboxylic acid and a moiety derived from an alkylene glycol can achieve the objects described above when used as a plasticizer for various resins such as polylactic acid-based resins. The present invention has been accomplished based on this novel finding.

The present invention provides plasticizers for resins, resin compositions containing such plasticizers, and articles formed from such resin compositions, as shown below.

1. A resin plasticizer comprising a compound represented by Formula (1):

$$R^1\text{-(O-}R^2\text{-CO)}_k\text{-O-[(CHR}^3)_p\text{(CHR}^4)_q\text{-O]}_r\text{[(CHR}^5)_{p'}\text{(CHR}^6)_{q'}\text{-O]}_{r'}\text{-}R^7$$

wherein $R^1$ is a hydrogen atom or $C_{2\text{-}20}$ acyl group; $R^2$ is a hydroxycarboxylic acid residue; each $R^3$, $R^4$, $R^5$ and $R^6$ is independently a hydrogen atom or a methyl group; $R^7$ is a $C_{1\text{-}8}$ alkyl or $C_{2\text{-}20}$ acyl group; k is an integer from 1 to 60; each p, p', q and q' is an integer from 0 to 6, provided that $1{\leq}p{+}q{\leq}6$ and $1{\leq}p'{+}q'{\leq}6$; and each r and r' is an integer from 0 to 7, provided that $1{\leq}r{+}r'{\leq}{<}7$.

2. A resin composition comprising a resin and the resin plasticizer of Item 1.

3. The resin composition according to Item 2 comprising the resin plasticizer in a proportion of about 1 to about 300 parts by weight per 100 parts by weight of resin.

4. The resin composition according to Item 2, wherein the resin is at least one thermoplastic resin selected from the group consisting of polyesters, polyolefins, polyamides, polyacetals, vinyl-based resins, styrene-based resins, acryl-based resins, and cellulose-based resins.

5. The resin composition according to Item 4, wherein the resin is a polyester.

6. The resin composition according to Item 5, wherein the polyester is a polylactic acid-based resin.

7. A molded article produced by molding the resin composition of Item 2.

8. A resin plasticizer comprising a reaction product obtained by reacting (a) a hydroxycarboxylic acid with (b) a compound represented by Formula (2):

$$HO\text{-[(CHR}^3)_p\text{(CHR}^4)_q\text{-O]}_r\text{[(CHR}^5)_{p'}\text{(CHR}^6)_{q'}\text{-O]}_{r'}\text{-}R^7$$

wherein each $R^3$, $R^4$, $R^5$ and $R^6$ is independently a hydrogen atom or a methyl group; $R^7$ is a $C_{1\text{-}8}$ alkyl or $C_{2\text{-}20}$ acyl group; each p, p', q and q' is an integer from 0 to 6, provided that $1{\leq}p{+}q{\leq}6$ and $1{\leq}p'{+}q'{\leq}6$; and each r and r' is an integer from 0 to 7, provided that $1{\leq}r{+}r'{\leq}7$; and optionally reacting the product of the reaction between (a) and (b) with (c) a $C_{2\text{-}20}$ carboxylic acid.

9. The resin plasticizer according to Item 8, wherein Ingredient (a) is at least one member selected from the group consisting of glycolic acid, oligomers of glycolic acid, lactic acid, oligomers of lactic acid, and heterooligomers of glycolic acid and lactic acid.

10. The resin plasticizer according to Item 8, wherein Ingredient (b) is at least one member selected from the group consisting of triethylene glycol monomethyl ether, triethylene glycol monoethyl ether, triethylene glycol monopropyl ether, triethylene glycol monobutyl ether, and tripropylene glycol monomethyl ether.

11. The resin plasticizer according to Item 8, wherein Ingredient (c) is at least one $C_{2\text{-}11}$ aliphatic carboxylic acid.

12. A resin composition comprising a resin and the resin plasticizer of Item 8.

13. The resin composition according to Item 12 comprising the resin plasticizer in a proportion of about 1 to about 300 parts by weight per 100 parts by weight of resin.

14. The resin composition according to Item 12, wherein the resin is at least one thermoplastic resin selected from the group consisting of polyesters, polyolefins, polyamides, polyacetals, vinyl-based resins, styrene-based resins, acryl-based resins, and cellulose-based resins.

15. The resin composition according to Item 14, wherein the resin is a polyester.

16. The resin composition according to Item 15, wherein the polyester is a polylactic acid-based resin.

17. A molded article produced by molding the resin composition of Item 12.

18. A resin plasticizer comprising a reaction product obtained by reacting (a) a hydroxycarboxylic acid with (c) a $C_{2\text{-}20}$ carboxylic acid; and then reacting the product of the reaction between (a) and (c) with (b) a compound represented by Formula (2) :

$$HO\text{-[(CHR}^3)_p\text{(CHR}^4)_q\text{-O]}_r\text{[(CHR}^5)_p\text{[(CHR}^6)_{q'}\text{-O]}_{r'}\text{-}R^7$$

wherein each $R^3$, $R^4$, $R^5$ and $R^6$ is independently a hydrogen atom or a methyl group; $R^7$ is a $C_{1\text{-}8}$ alkyl or $C_{2\text{-}20}$ acyl group; each p, p', q and q' is an integer from 0 to 6, provided that $1{\leq}p{+}q{\leq}6$ and $1{\leq}p'{+}q'{\leq}6$; and each r and r' is an integer from 0 to 7, provided that $1{\leq}r{+}r'{\leq}7$.

According to the present invention, the following remarkable effects can be obtained:

(1) The resin plasticizer of the invention has high compatibility with various resins and imparts excellent plasticizing effects and bleeding resistance to molded resin articles.

(2) Resin compositions containing the plasticizer barely undergo change over time, and are usable in producing molded articles that have excellent transparency, flexibility, and like physical properties. Moreover, such resin compositions are highly safe because the chance of the resin compositions catching fire during resin molding is minimal due to the absence of the low-flash point component methyl lactate in the plasticizer used.

(3) Resin compositions prepared by adding the plasticizer of the invention to polylactic acid-based resins exhibit biodegradability superior to that of commonly-used plastics and have less heat of combustion, thereby contributing to solving waste disposal problems.

The plasticizer of the invention contains a compound represented by Formula (1).

In Formula (1), $R^1$ is a hydrogen atom or a $C_{2-20}$ acyl group; $R^2$ is a hydroxycarboxylic acid residue; each $R^3$, $R^4$, $R^5$ and $R^6$ is independently a hydrogen atom or a methyl group; $R^7$ is a $C_{1-8}$ alkyl or $C_{2-20}$ acyl group; k is an integer from 1 to 60; each p, p', q and q' is an integer from 0 to 6, provided that $1 \leq p+q \leq 6$ and $1 \leq p'+q' \leq 6$; and each r and r' is an integer from 0 to 7, provided that $1 \leq r+r' \leq 7$.

Examples of $C_{2-20}$ acyl groups represented by $R^1$ and $R^7$ in Formula (1) are aliphatic acyl groups such as acetyl, propionyl, butyryl, isobutyryl, enanthoyl, isononanoyl, palmitoyl, stearoyl, and the like; aromatic acyl groups such as benzoyl, hydroxybenzoyl, naphthoyl, and the like; etc.

Examples of hydroxycarboxylic acid residues represented by $R^2$ are residues formed from glycolic acid, D-lactic acid, L-lactic acid, DL-lactic acid, 3-hydroxybutyric acid, 4-hydroxybutyric acid, 4-hydroxyvaleric acid, 5-hydroxyvaleric acid, 6-hydroxycaproic acid, etc.

Examples of $C_{1-8}$ alkyl groups represented by $R^7$ are methyl, ethyl, propyl, butyl, isobutyl, pentyl, hexyl, heptyl, octyl, cyclohexyl, etc.

Among the compounds represented by Formula (1), those represented by Formula (1) wherein all of p, p', q and q' are 1, r+r' is 3, $R^1$ is a hydrogen atom, $R^2$ is a lactic acid residue, all of $R^3$, $R^4$, $R^5$ and $R^6$ is a hydrogen atom, and $R^7$ is a methyl group; and those represented by Formula (1) wherein all of p, p', q and q' are 1, r+r' is 3, $R^1$ is a $C_{2-11}$ aliphatic acyl group, $R^2$ is a lactic acid residue, all of $R^3$, $R^4$, $R^5$ and $R^6$ are hydrogen atoms, and $R^7$ is a methyl group, are preferable to impart better transparency and flexibility to molded articles formed from resin compositions in which such compounds are mixed with resins (polylactic acid-based resins in particular).

Methods for producing the compounds of Formula (1) are not limited. For example, the compounds can be produced using the following Methods (A) and (B):

Method (A) is carried out by reacting (a) a hydroxycarboxylic acid with (b) a compound represented by Formula (2):

$$HO\text{-}[(CHR^3)_p(CHR^4)_q\text{-}O]_r[(CHR^5)_{p'}(CHR^6)_{q'}\text{-}O]_{r'}\text{-}R^7$$

wherein each $R^3$, $R^4$, $R^5$ and $R^6$ is independently a hydrogen atom or a methyl group; $R^7$ is a $C_{1-8}$ alkyl or $C_{2-20}$ acyl group; each p, p', q and q' is an integer from 0 to 6, provided that $1 \leq p+q \leq 6$ and $1 \leq p'+q' \leq 6$; and each r and r' is an integer from 0 to 7, provided that $1 \leq r+r' \leq 7$, and, if necessary, reacting the product of the reaction between (a) and (b) with (c) a $C_{2-20}$ carboxylic acid.

The reaction product obtained according to Method (A) contains a compound of Formula (1) as a principal component and therefore need not necessarily be purified, and can be used as the plasticizer of the invention as is or in conjunction with various additives such as antioxidants and the like.

According to Method (A), by reacting (a) a hydroxycarboxylic acid with (b) a compound represented by Formula (2), a reaction product having as a principal component a compound of Formula (1) wherein $R^1$ is a hydrogen atom and $R^7$ is a $C_{1-8}$ alkyl group is obtained.

Furthermore, by reacting (c) a $C_{2-20}$ carboxylic acid with the compound obtained by reacting Ingredient (a) with Ingredient (b), a reaction product having as a principal component a compound of Formula (1) wherein $R^1$ is a $C_{2-20}$ acyl group and $R^7$ is a $C_{1-8}$ alkyl or $C_{2-20}$ acyl group is obtained.

Method (B) is carried out by reacting (a) a hydroxycarboxylic acid with (c) a $C_{2-20}$ carboxylic acid; and then reacting the product of the reaction between (a) and (c) with (b) a compound represented by Formula (2):

$$HO\text{-}[(CHR^3)_p(CHR^4)_q\text{-}O]_r[(CHR^5)_{p'}(CHR^6)_{q'}\text{-}O]_{r'}\text{-}R^7$$

wherein each $R^3$, $R^4$, $R^5$ and $R^6$ is independently a hydrogen atom or a methyl group; $R^7$ is a $C_{1-8}$ alkyl or $C_{2-20}$ acyl group; each p, p', q and q' is an integer from 0 to 6, provided that $1 \leq p+q \leq 6$ and $1 \leq p'+q' \leq 6$; and each r and r' is an integer from 0 to 7, provided that $1 \leq r+r' \leq 7$.

The reaction product obtained according to Method (B) contains a compound of Formula (1) as a principal component and therefore need not necessarily be purified, and can be used as the plasticizer of the invention as is or in conjunction with various additives such as antioxidants and the like.

According to Method (B), a reaction product having as a principal component a compound of Formula (1) wherein $R^1$ is a $C_{2-20}$ acyl group and $R^7$ is a $C_{1-8}$ alkyl group is obtained.

Any hydroxycarboxylic acids are usable as Ingredients (a) insofar as they have at least one hydroxyl group and at least one carboxyl group per molecule. Specific examples thereof are glycolic acid, L-lactic acid, D-lactic acid, DL-lactic acid, 3-hydroxybutyric acid, 4-hydroxybutyric acid, 4-hydroxyvaleric acid, 5-hydroxyvaleric acid, 6-hydroxycaproic acid, and oligomers of such hydroxycarboxylic acids.

When oligomers are used, they may be homooligomers composed of a single hydroxycarboxylic acid or heterooligomers composed of different types of hydroxycarboxylic acids. It is preferable to use hydroxycarboxylic acid oligomers to enhance plasticizing effects and bleeding resistance and to raise the flash point.

While commercially available hydroxycarboxylic acids generally contain some oligomers, hydroxycarboxylic acid oligomers can be actively produced. Hydroxycarboxylic acid oligomers are usually obtained by polycondensing hydroxycarboxylic acids according to known esterification methods. For example, hydroxycarboxylic acid oligomers can be obtained by polycondensation carried out at high temperature conditions of about 130 to about 250°C while removing by-product water from the reaction system. The presence of air in the polycondensation reaction may result in the coloration of the product oligomer, and therefore the reaction is preferably carried out in an inert gas environment of nitrogen, helium, or the like. Although a polycondensation catalyst need not necessarily be used for the polycondensation reaction, it may be used to shorten the reaction time. Examples of such catalysts are acids such as acetic acid, $p$-toluenesulphonic acid, and the like; hydroxides of alkaline earth metals such as calcium hydroxide and the like; oxides of alkaline earth metals such as calcium oxide, magnesium oxide, and the like; organophosphorus compounds such as triphenyl phosphite and the like; tin compounds such as tin octylate, dibutyltin dilaurate, and the like; etc. It is usually preferable that the degree of polymerization of oligomers as obtained above be about 2 to about 60. A degree of polymerization exceeding 60 is not preferable because it is likely to impair plasticizing effects.

To enhance the transparency and flexibility of molded articles formed from resin compositions obtained by adding Ingredients (a) to polylactic acid-based resins, preferable examples of Ingredients (a) are glycolic acid, oligomers of glycolic acid, lactic acid, oligomers of lactic acid, and heterooligomers of glycol and lactic acid. D-lactic acid, L-lactic acid, and DL-lactic acid are usable as lactic acid. The degree of polymerization of these oligomers is preferably about 2 to about 40, and more preferably about 2 to about 20. In particular, most preferable are dimeric to icosameric oligomers of lactic acid and dimeric to icosameric oligomers of glycolic acid.

Ingredients (b) are not limited insofar as they are the compounds encompassed by Formula (2). Known compounds are therefore usable.

$C_{1-8}$ alkyl groups and $C_{2-20}$ acyl groups represented by $R^7$ in Formula (2) are as described for Formula (1).

With respect to Formula (2), compounds with the number of p+q or p'+q' exceeding 6 or the number of r+r' exceeding 7 are not preferable because the compatibility between resins and the resulting plasticizers is poor, resulting in impaired transparency of articles molded from resin compositions incorporating the plasticizers.

Specific examples of Ingredients (b) are alkylene glycol monoalkyl ethers such as ethylene glycol monomethyl ether, ethylene glycol monoethyl ether, diethylene glycol monomethyl ether, diethylene glycol monoethyl ether, triethylene glycol monomethyl ether, triethylene glycol monoethyl ether, polyethylene glycol monomethyl ether, propylene glycol monomethyl ether, propylene glycol monoethyl ether, polypropylene glycol monomethyl ether, tetramethylene glycol monomethyl ether, polytetramethylene glycol monomethyl ether, and the like; alkylene glycol monocarboxylic acid esters such as ethylene glycol monoacetate, ethylene glycol monobenzoate, diethylene glycol monoacetate, diethylene glycol monobenzoate, triethylene glycol monoacetate, triethylene glycol monobenzoate, propylene glycol monoacetate, propylene glycol monobenzoate, and the like; etc.

An alkylene glycol monoalkyl ether can be obtained by, for example, subjecting an alcohol and an alkylene oxide to addition polymerization in the presence of an alkaline catalyst at about 150°C. An alkylene glycol monocarboxylic acid ester can be obtained by, for example, subjecting a monocarboxylic acid and an alkylene oxide to addition polymerization, or by subjecting a monocarboxylic acid and an alkylene glycol to esterification. Examples of alkylene oxides are ethyleneoxide, propylene oxide, butylene oxide (THF), etc. Alkylene oxides can be used singly or as a combination of two or more types. Alcohols usable in the production of alkylene glycol monoalkyl ethers are not limited, and $C_{1-8}$ alcohols are given as examples. Examples of monocarboxylic acids usable in the production of alkylene glycol monocarboxylic acid esters are $C_{1-8}$ monocarboxylic acids.

Among Ingredients (b), triethylene glycol monomethyl ether, triethylene glycol monoethyl ether, triethylene glycol monopropyl ether, triethylene glycol monobutyl ether, and tripropylene glycol monomethyl ether are preferable because the resulting plasticizers exhibit good compatibility with and plasticizing effects on resins (polylactic acid-based resins in particular). Moreover, triethylene glycol monomethyl ether, triethylene glycol monoethyl ether, and triethylene glycol monopropyl ether are particularly preferable due to their effect of enhancing bleeding resistance. Furthermore, triethylene glycol monomethyl ether is especially preferable due to its remarkable effects, i.e., plasticizing effect and effect of enhancing bleeding resistance.

Examples of Ingredients (c), i.e., $C_{2-20}$ carboxylic acids, are acetic acid, valeric acid, caproic acid, enanthic acid, caprylic acid, pelargonic acid, capric acid, undecylic acid, lauric acid, octylic acid, isononanoic acid, myristic acid, stearic acid, and like saturated aliphatic carboxylic acids and anhydrides thereof; undecylenic acid, oleic acid, and like unsaturated aliphatic carboxylic acids and anhydrides thereof; benzoic acid, *p*-hydroxybenzoic acid, and like aromatic carboxylic acids and anhydrides thereof; etc. Among such examples, the use of $C_{2-11}$ aliphatic carboxylic acids is preferable due to the fact that the resulting plasticizers exhibit good compatibility with and plasticizing effects on resins (polylactic acid-based resins in particular). The use of $C_{2-7}$ aliphatic carboxylic acids is particularly preferable to enhance bleeding resistance.

The reaction of Ingredients (a) with (b), the reaction of the reaction product of Ingredients (a) and (b) with Ingredient (c), and the reaction of Ingredients (a) with (c) can be carried out according to known esterification methods. In particular, these reactions may be carried out at high temperature conditions of about 130 to about 250°C while removing water formed as a by-product from the reaction system. The presence of air in the esterification reaction may result in the coloration of the resulting esterified product, and therefore the reaction is preferably carried out in an inert gas environment of nitrogen, helium, or the like. Although an esterification catalyst need not necessarily be used for the reaction, it may be used to shorten the reaction time. Examples of such catalysts are acid catalysts such as acetic acid, p-toluenesulphonic acid, and the like; hydroxides of alkaline earth metals such as calcium hydroxide and the like; oxides of alkaline earth metals such as calcium oxide, magnesium oxide, and the like; organophosphorus compounds such as triphenyl phosphite and the like; tin compounds such as tin octylate, dibutyltin dilaurate, and the like; etc.

The proportion of Ingredient (a) to Ingredient (b) in the reaction is preferably about 1.3 to about 5.0 mol of Ingredient (a) per mol of Ingredient (b). When Ingredient (a) is oligomeric, Ingredient (a) is preferably used in an amount such that the hydroxycarboxylic acid equivalents contained in Ingredient (a) are about 1.3 to about 5.0 mol per mol of Ingredient (b). When the proportion of Ingredient (a) is smaller than 1.3, it takes a longer period of time to complete the reaction, and the reaction product may exhibit a lowered flash point and impaired bleeding resistance. Although the use of Ingredient (a) in larger amounts is likely to enhance plasticizing effects, the proportion of Ingredient (a) exceeding 5.0 deteriorates production efficiency and is likely to impair plasticizing effects.

The proportion of Ingredient (c) in the reaction can be suitably selected such that the terminal hydroxyl groups derived from Ingredient (a) can be acylated.

In Methods (A) and (B) for producing the compounds of Formula (1), Ingredients (a) and/or (c) may be used in the form of chlorides to promote the reaction.

The compounds of Formula (1) as obtained above are usually in the form of a pale yellow liquid with a weight average molecular weight of about 300 to about 1,500.

The compounds of Formula (1) and the reaction products obtained according to the aforementioned Methods (A) and (B) that contain the compounds of Formula (1) as principal components all demonstrate excellent plasticizing effects and can thus be used as plasticizers for various resins.

Examples of resins to which the aforementioned plasticizers are applicable are thermoplastic resins such as polyolefins, polyamides, polyacetals, styrene-based resins, acryl-based resins, cellulose-based resins, vinyl-based resins, polyesters, etc.

Examples of polyolefins are olefin homopolymers such as polyethylene, polypropylene, poly-1-butene, polymethylpentene, polymethylbutene, and the like; olefine copolymers such as propylene/ethylene random copolymer and the like; etc. Such polyolefins can be used singly or as a combination of two or more types.

Examples of polyamides are aliphatic polyamides such as nylon-6, nylon-66, nylon-10, nylon-12, nylon-46, and the like; aromatic polyamides producible from aromatic dicarboxylic acids and aliphatic diamines; etc. Such polyamides can be used singly or as a combination of two or more types.

Examples of polyacetals are polyformaldehyde (polyoxymethylene), polyacetaldehyde, polypropionaldehyde, polybutylaldehyde, etc. Such polyacetals can be used singly or as a combination of two or more types.

Examples of styrene-based resins are polystyrene, AS resin, ABS resin, etc. Such styrene-based resins can be used singly or as a combination of two or more types.

Examples of acryl-based resins are polymethacrylic acid esters such as polymethylmethacrylate and the like. Such acryl-based resins can be used singly or as a combination of two or more types.

Examples of cellulose-based resins are cellophane, celluloid, cellulose acetate, cellulose diacetate, cellulose triacetate, cellulose propionate, cellulose acetate propionate, cellulose acetate butylate, methyl acetate, ethyl cellulose, carboxymethyl cellulose, hydroxyethyl cellulose, hydroxypropyl cellulose, ethylhydroxyethyl cellulose, carboxymethylethyl cellulose, etc. Such cellulose-based resins can be used singly or as a combination of two or more types.

Examples of vinyl-based resins are vinyl chloride resins, vinylidene chloride resins, saran, vinyl acetate resins, ethylene/vinyl acetate copolymers, polyvinyl alcohol, polyvinyl acetal, polyvinyl methyl ether, etc. Such vinyl-based resins can be used singly or as a combination of two or more types.

Examples of polyesters are polyethylene terephthalate, polyethylene naphthalate, polybutylene terephthalate, and like aromatic polyesters; polycaprolactone, polyhydroxy butyrate, polybutylene succinate, polybutylene succinate/adipate copolymers, polybutylene adipate/terephthalate copolymers, polylactic acid-based resins, etc. Such polyesters can be used singly or as a combination of two or more types.

Any polyester resins can be used as polylactic acid-based resins without limitation insofar as they are obtainable by polymerizing lactic acid. Lactic acid to be used in the polymerization may be L-lactic acid, D-lactic acid, or a combination of L-lactic acid and D-lactic acid. Moreover, polylactic acid-based resins are not limited to being homopolymers of polylactic acid and may be copolymers and polymer blends thereof.

Components of polylactic acid copolymers are, for example, hydroxycarboxylic acids such as glycolic acid, 3-hydroxybutyric acid, 5-hydroxyvaleric acid, 6-hydroxycaproic acid, and the like; dicarboxylic acids such as succinic acid, adipic acid, sebacic acid, glutaric acid, decanedicarboxylic acid, terephthalic acid, isophthalic acid, and the like; polyhydric alcohols such as ethylene glycol, propanediol, octanediol, dodecanediol, glycerol, sorbitan, polyethylene glycol, and the like; and lactones such as glycolide, ε-caprolactone, δ-butyrolactone, and the like. Examples of polymers that can be blended with polylactic acid are cellulose, cellulose nitrate, methyl cellulose, regenerated cellulose, glycogen, chitin, chitosan, polybutylene succinate, polybutylene succinate/adipate, polybutylene succinate/terephthalate, etc.

Polyesters are preferable as resins to which the plasticizer of the present invention is applied. Among polyesters, polylactic acid-based resins are particularly preferable because polylactic acid-based resins are highly compatible with the plasticizer of the present invention and can benefit from the excellent plasticizing effect when the plasticizer is added. For example, the plasticizer in a proportion of about 30 parts by weight per 100 parts by weight of polylactic acid-based resin can usually lower the glass transition temperature by at least 20°C.

The proportion of the plasticizer of the invention is about 1 to about 300 parts by weight, preferably about 5 to about 150 parts by weight, and more preferably about 10 to about 100 parts by weight, per 100 parts by weight of resin. The use of the plasticizer in the aforementioned ranges is preferable because the product composition barely undergoes deterioration of physical properties over time, and the flexibility of molded articles formed from the composition is enhanced without sacrificing transparency. The plasticizer of the invention can be used in conjunction with known plasticizers if necessary.

Methods for mixing plasticizers with resins are not limited. Conventional mixing methods using blenders, mixers and the like, and melt-kneading methods using extruders, Banbury mixers and the like can be mentioned as examples. Alternatively, plasticizers can be mixed in advance during resin production.

Resin compositions containing the plasticizer of the invention may contain various additives other than the plasticizer insofar as the effect of the invention is not impaired. Examples of such additives are crystal nucleating agents, antistatic agents, blowing agents, heat stabilizers, light stabilizers, antiweathering agents, lubricants, mold-releasing agents, inorganic fillers, pigment dispersants, pigments, dyes, etc.

Resin compositions containing the plasticizer of the invention, as with commonly used thermoplastic resins, can be formed by a variety of molding processes such as extrusion molding, injection molding, oriented film formation, blow molding, etc., to produce various molded articles.

Molded articles as obtained above can be suitably used as materials in a wide variety of applications, from household to industrial items. Examples of the fields of application are food containers, electrical components, electronic components, automotive parts, mechanical parts, films, sheets, fibers, etc.

BEST MODE FOR CARRYING OUT THE INVENTION

Examples, Comparative Examples, and Test Examples are given below to illustrate the invention in more detail, but the scope of the invention is not limited to these examples.

The weight average molecular weight of the polymer in each Example was obtained by GPC against polystyrene standards. The following device, manufactured by Tosoh Corporation, was used as an analyzer.

GPC: HLC-8220,
Data processing system: GPC-8020 model II,
Columns: TSK guard column HXL-L, TSK-GEL G2000HXL, and TSK-GEL G1000HXL connected together.

Example 1

Into a one-liter reactor equipped with a condenser and a stirrer were introduced 398.9 g (equivalent to 4.0 mol lactic acid) of L-lactic acid (trade name: "HiPure 90", manufacture by PURAC, L-lactic acid content: about 90 wt. %) and 285.5 g (1.7 mol) of triethylene glycol monomethyl ether. The reactants were heated to 170°C. The reactants were maintained at 170°C for 1 hour, and 2.4 g of triphenyl phosphite was then added (0.6 parts by weight based on 100 parts by weight of L-lactic acid). After the addition of triphenyl phosphite, the reaction mixture was maintained at 170°C for 4 hours and then heated to 220°C, and stirred for 10 hours. The unreacted ingredients were evaporated off under reduced pressure, thereby giving 517.8 g of a triethylene glycol monomethyl ether lactic acid oligomer ester (weight average molecular weight: about 500).

Example 2

Into a one-liter reactor equipped with a condenser and a stirrer was introduced 315.0 g (equivalent to 3.1 mol lactic acid) of L-lactic acid (trade name: "HiPure 90", manufacture by PURAC, L-lactic acid content: about 90 wt.%). The ingredient was heated to 170°C. Five hours later, 208.2 g (1.3 mol) of triethylene glycol monomethyl ether was introduced dropwise into the reactor over a period of 15 minutes. The reactants were then heated to 200°C, and 25 hours later, 126.8 g (1.0 mol) of enanthic acid (trade name: "Heptylic Acid", manufactured by Itoh Oil Chemicals Co., Ltd.) was introduced dropwise over a period of 10 minutes. The reaction mixture was then maintained at 170°C for 50 hours, and the unreacted ingredients were then evaporated off under reduced pressure, thereby giving 316.6 g of a triethylene glycol monomethyl ether lactic acid oligomer/enanthic acid ester (weight average molecular weight: about 700).

Example 3

Into a one-liter reactor equipped with a condenser and a stirrer was introduced 315.0 g (equivalent to 3.1 mol lactic acid) of L-lactic acid (trade name: "HiPure 90", manufacture by PURAC, L-lactic acid content: about 90 wt.%). The ingredient was heated to 170°C. Five hours later, 208.2 g (1.3 mol) of triethylene glycol monomethyl ether was introduced dropwise over a period of 15 minutes. The reactants were heated to 200°C. Twenty five hours later, they were cooled to 140°C, and 265.5 g (2.6 mol) of acetic anhydride (manufacture by Wako Pure Chemical Industries, Ltd.) was introduced dropwise into the reactor over a period of 20 minutes. The reaction mixture was then maintained at 140°C for 4 hours, and the unreacted ingredients were then evaporated off under reduced pressure, thereby giving 432.0 g of a triethylene glycol monomethyl ether lactic acid oligomer/acetic acid ester (weight average molecular weight: about 520).

Example 4

Into a one-liter reactor equipped with a condenser and a stirrer was introduced 315.0 g (equivalent to 3.1 mol lactic acid) of L-lactic acid (trade name: "HiPure 90", manufacture by PURAC, L-lactic acid content: about 90 wt.%). The ingredient was heated to 170°C. Five hours later, 208.2 g (1.3 mol) of triethylene glycol monomethyl ether was introduced dropwise over a period of 15 minutes. The reactants were heated to 200°C. Twenty five hours later, 238.2 g of (1.2 mol) of lauric acid (trade name: "LUNAC L-98", manufacture by Kao Corporation) was introduced gradually. The reaction mixture was then maintained 200°C for 40 hours, and the unreacted ingredients were evaporated off under reduced pressure, thereby giving 570.2 g of a triethylene glycol monomethyl ether lactic acid oligomer/lauric acid ester (weight average molecular weight: about 700).

Example 5

Into a one-liter reactor equipped with a condenser and a stirrer were introduced 434.4 g (equivalent to 4.1 mol glycolic acid) of glycolic acid (trade name: "GLYCOLIC ACID", manufacture by DuPont, glycolic acid content: about 70 wt.%) and 286.3 g (1.7 mol) of triethylene glycol monomethyl ether. The reactants were heated to 170°C. The reactants were maintained at 170°C for 1 hour, and 2.6 g (0.6 parts by weight based on 100 parts by weight of glycolic acid) of triphenyl phosphite was added. After the addition of triphenyl phosphite, the reaction mixture was maintained at 170°C for 4 hours and then heated to 220°C, and stirred for 5 hours. The unreacted ingredients were evaporated off under reduced pressure, thereby giving 465.6 g of a triethylene glycol monomethyl ether glycolic acid oligomer ester (weight average molecular weight: about 500).

Example 6

Into a one-liter reactor equipped with a condenser and a stirrer were introduced 398.9 g (equivalent to 4.0 mol lactic acid) of L-lactic acid (trade name: "HiPure 90", manufacture by PURAC, L-lactic acid content: about 90 wt.%) and 503.4 g (3.1 mol) of triethylene glycol monomethyl ether. The reactants were heated to 170°C. The reactants were maintained at 170°C for 1 hour, and 2.4 g (0.6 parts by weight based on 100 parts by weight of L-lactic acid) of triphenyl phosphite was added. After the addition of triphenyl phosphite, the reaction mixture was maintained at 170°C for 4 hours and then heated to 220°C, and stirred for 10 hours. The unreacted ingredients were evaporated off under reduced pressure, thereby giving 731.7 g of a triethylene glycol monomethyl ether lactic acid oligomer ester (weight average molecular weight: about 400).

Example 7

Into a one-liter reactor equipped with a condenser and a stirrer were introduced 398.9 g (equivalent to 4.0 mol lactic acid) of L-lactic acid (trade name: "HiPure 90", manufacture by PURAC, L-lactic acid content: about 90 wt. %) and 130.6 g (0.8 mol) of triethylene glycol monomethyl ether. The reactants were heated to 170°C. The temperature was maintained at 170°C for 1 hour, and 2.4 g (0.6 parts by weight based on 100 parts by weight of L-lactic acid) of triphenyl phosphite was added. After the addition of triphenyl phosphite, the reaction mixture was maintained at 170°C for 4 hours and then heated to 220°C, and stirred for 8 hours. The unreacted ingredients were evaporated off under reduced pressure, thereby giving 382.4 g of a triethylene glycol monomethyl ether lactic acid oligomer ester (weight average molecular weight: about 1,000).

Example 8

Into a one-liter reactor equipped with a condenser and a stirrer were introduced 398.9 g (equivalent to 4.0 mol lactic acid) of L-lactic acid (trade name: "HiPure 90", manufacture by PURAC, L-lactic acid content: about 90 wt. %) and 360.9 g (1.7 mol) of tripropylene glycol monomethyl ether. The reactants were heated to 170°C. The reactants were maintained at 170°C for 1 hour, and 2.4 g (0.6 parts by weight based on 100 parts by weight of L-lactic acid) of triphenyl phosphite was added. After the addition of triphenyl phosphite, the reaction mixture was maintained at 170°C for 4 hours and then heated to 220°C, and stirred for 5 hours. The unreacted ingredients were evaporated off under reduced pressure, thereby giving 560.7 g of a tripropylene glycol monomethyl ether lactic acid oligomer ester (weight average molecular weight: about 600).

Example 9

Into a one-liter reactor equipped with a condenser and a stirrer were introduced 398.9 g (equivalent to 4.0 mol lactic acid) of L-lactic acid (trade name: "HiPure 90", manufacture by PURAC, L-lactic acid content: about 90 wt. %) and 358.7 g (1.7 mol) of triethylene glycol monobutyl ether. The reactants were heated to 170°C. The reactants were maintained at 170°C for 1 hour, and 2.4 g (0.6 parts by weight based on 100 parts by weight of L-lactic acid) of triphenyl phosphite was added. After the addition of triphenyl phosphite, the reaction mixture was maintained at 170°C for 4 hours and then heated to 220°C, and stirred for 10 hours. The unreacted ingredients were evaporated off under reduced pressure, thereby giving 570.4 g of a triethylene glycol monobutyl ether lactic acid oligomer ester (weight average molecular weight: about 500).

Example 10

Into a one-liter reactor equipped with a condenser and a stirrer were introduced 398.9 g (equivalent to 4.0 mol lactic acid) of L-lactic acid (trade name: "HiPure 90", manufacture by PURAC, L-lactic acid content: about 90 wt. %) and 309.9 g (1.7 mol) of triethylene glycol monoethyl ether. The reactants were heated to 170°C. The reactants were maintained at 170°C for 1 hour, and 2.4 g (0.6 parts by weight based on 100 parts by weight of L-lactic acid) of triphenyl phosphite was added. After the addition of triphenyl phosphite, the reaction mixture was maintained at 170°C for 4 hours and then heated to 220°C, and stirred for 10 hours. The unreacted ingredients were evaporated off under reduced pressure, thereby giving 567.4 g of a triethylene glycol monoethyl ether lactic acid oligomer ester (weight average molecular weight: about 500).

Comparative Example 1

Into a one-liter reactor equipped with a condenser and a stirrer was introduced 624.6 g (equivalent to 6.0 mol) of methyl lactate (trade name: "PURASOLVE ML", manufacture by PURAC). The ingredient was heated to 135°C. The temperature was maintained at 135°C for 7 hours, and 0.6 g (0.1 parts by weight based on 100 parts by weight of methyl lactate) of dibutyltin dilaurate was then added and stirred for 70 hours. The unreacted ingredients were evaporated off under reduced pressure, thereby giving 400.8 g of lactic acid oligomer methyl ester (weight average molecular weight: about 400).

Comparative Example 2

Into a two-liter reactor equipped with a condenser and a stirrer were introduced 398.9 g (equivalent to 4.0 mol lactic acid) of L-lactic acid (trade name: "HiPure 90", manufacture by PURAC, L-lactic acid content: about 90 wt. %) and 695.1 g (about 1.7 mol) of polyethylene glycol monomethyl ether (trade name: "Toho Methoxy Polyethylene Glycol 400", manufactured by Toho Chemical Industry Co., Ltd., average molecular weight: 374 to 432). The reactants were heated to 170°C. The reactants were maintained at 170°C for 1 hour, and 2.4 g (0.6 parts by weight based on 100 parts by weight of L-lactic acid) of triphenyl phosphite was then added. After the addition of triphenyl phosphite, the reaction mixture was maintained at 170°C for 5 hours and then heated to 220°C, and stirred for 10 hours. The unreacted ingredients were evaporated off under reduced pressure, thereby giving 874.6 g of a polyethylene glycol monomethyl ether lactic acid oligomer ester (weight average molecular weight: about 800).

Comparative Example 3

Into a two-liter reactor equipped with a condenser and a stirrer were introduced 398.9 g (equivalent to 4.0 mol lactic acid) of L-lactic acid (trade name: "HiPure 90", manufacture by PURAC, L-lactic acid content: about 90 wt. %) and 484.0 g (about 1.2 mol) of polyethylene glycol monomethyl ether (trade name: "Toho Methoxy Polyethylene Glycol 400", manufactured by Toho Chemical Industry Co., Ltd., average molecular weight: 374 to 432). The reactants were heated to 170°C. The temperature was maintained at 170°C for 1 hour, and 2.4 g (0.6 parts by weight based on 100 parts by weight of L-lactic acid) of triphenyl phosphite was then added. After the addition of triphenyl phosphite, the reaction mixture were maintained at 170°C for 5 hours and then heated to 220°C, and stirred for 10 hours. The unreacted ingredients were evaporated off under reduced pressure, thereby giving 874.6 g of a polyethylene glycol monomethyl ether lactic acid oligomer ester (weight average molecular weight: about 1,000).

Test Examples 1 to 19

The compounds obtained in Examples 1 to 10 and Comparative Examples 1 to 3, and glyceryl triacetate (a known plasticizer), were added as plasticizers in the proportions indicated in Table 1 to 100 parts by weight of polylactic acid (trade name: "LACTY 9031", manufactured by Shimadzu Corporation, weight average molecular weight: 140,000, melting point: 133°C), polybutylene adipate/terephthalate copolymer (trade name: "Ecoflex", manufactured by BASF), or polybutylene succinate (trade name: "Bionolle #1001G", manufactured by Showa Highpolymer Co., Ltd.), and melt-kneaded by a torque rheometer manufactured by Brabender (trade name: "Plasti-Corder PL-2000") at a preset temperature of 190°C, thereby giving resin compositions. In contrast, as plasticizer-free examples, the aforementioned resins without being mixed with the plasticizers were subjected to melt-kneading in a similar manner.
The resulting melt-kneaded resins and resin compositions were subjected to compression molding at a melting temperature of 170°C and a cooling temperature of 20°C to produce test pieces (10 mm x 10 mm x 2 mm rectangular parallelepipeds). The transparency, flexibility, and bleeding resistance of the test pieces were then examined.
Transparency: Test pieces were inspected with the naked eye. Those that are not cloudy were evaluated as A, and those that are cloudy were evaluated as B.
Flexibility: The glass transition temperatures (°C) of the test pieces were measured as a flexibility index. When the glass transition temperature is the same as or lower than ambient temperature, the test piece is in a rubber-like condition, i.e., flexible. Glass transition temperatures were measured using a differential scanning calorimeter (trade name: "DSC220C", manufactured by Seiko Instruments Inc.).
Bleeding resistance: Test pieces were stored in a chamber at ambient temperature or in a thermostatic chamber at 70°C. One week later, the proportion (%) of the surface area with a bled-out plasticizer was calculated using the following formula:

$$[\text{Surface area of bled-out plasticizer} / \text{Area of top surface of test piece (10 mm x 10 mm)}] \times 100$$

Based on the proportion of bled-out areas as obtained above, the extent of bleeding resistance was evaluated on a four-point scale, with 4 meaning a bled-out area of 0%, 3 meaning a bled-out area of more than 0% but less than 10%, 2 meaning a bled-out area of 10% or more but less than 50%, and 1 meaning a bled-out area of 50% or more.
Test results are shown in Table 1.

Table 1

| | Plasticizer | Resin | Amount of plasticizer (parts by weight) | Transparency | Glass transition temperature (°C) | Bleeding resistance | |
|---|---|---|---|---|---|---|---|
| | | | | | | Room temperature | 70°C |
| Test Ex.1 | Ex. 1 | PLA | 30 | A | 15 | 4 | 4 |
| Test Ex. 2 | Ex. 2 | PLA | 30 | A | 22 | 4 | 4 |
| Test Ex. 3 | Ex. 3 | PLA | 30 | A | 18 | 4 | 4 |
| Test Ex.4 | Ex. 4 | PLA | 30 | A | 15 | 4 | 3 |
| Test Ex. 5 | Ex. 5 | PLA | 30 | A | 18 | 4 | 3 |
| Test Ex. 6 | Ex. 6 | PLA | 30 | A | 11 | 4 | 3 |
| Test Ex. 7 | Ex. 7 | PLA | 30 | A | 34 | 4 | 4 |
| Test Ex. 8 | Ex. 8 | PLA | 30 | A | 22 | 4 | 3 |
| Test Ex. 9 | Ex. 9 | PLA | 30 | A | 27 | 4 | 3 |
| Test Ex. 10 | Ex. 10 | PLA | 30 | A | 17 | 4 | 3 |
| Test Ex. 11 | Ex. 1 | PBAT | 30 | B | -49 | 4 | 4 |
| Test Ex. 12 | Ex. 1 | PBS | 30 | B | -48 | 4 | 4 |
| Test Ex. 13 | Comp. Ex.1 | PLA | 30 | A | 24 | 4 | 2* |
| Test Ex. 14 | Comp. Fx. 2 | PLA | 30 | A | 15 | 4 | 1 |
| Test Ex. 15 | Comp. Ex. 3 | PLA | 30 | A | 17 | 4 | 1 |
| Test Ex. 16 | GTA | PLA | 30 | A | 28 | 1 | 4 |
| Test Ex. 17 | None | PLA | - | A | 60 | - | - |
| Test Ex. 18 | None | PBAT | - | B | -22 | - | - |
| Test Ex. 19 | None | PBS | - | B | -23 | - | - |

In Table 1, GTA used as a plasticizer refers to glyceryl triacetate (trade name: "Triacetin", manufactured by Daihachi Chemical Industry Co., Ltd.). PLA used as a resin refers to polylactic acid, PBAT refers to polybutylene adipate/ terephthalate copolymer, and PBS refers to polybutylene succinate.

In Table 1, "2*" was given for the result of the bleeding resistance test at 70°C of Test Example 13 because the plasticizer used therein had a low boiling point and evaporated off at 70°C, and therefore bleeding-out could not be inspected with the naked eye. The glass transition temperature of the test piece measured after the test revealed a significant increase in glass transition temperature by 39°C, clearly indicating the occurrence of bleeding.

**Claims**

1.  A resin plasticizer comprising a compound represented by Formula (1):

$$R^1\text{-}(O\text{-}R^2\text{-}CO)_k\text{-}O\text{-}[(CHR^3)_p(CHR^4)_q\text{-}O]_r[(CHR^5)_{p'}(CHR^6)_{q'}\text{-}O]_{r'}\text{-}R^7$$

wherein $R^1$ is a hydrogen atom or $C_{2-20}$ acyl group; $R^2$ is a hydroxycarboxylic acid residue; each $R^3$, $R^4$, $R^5$ and $R^6$ is independently a hydrogen atom or a methyl group; $R^7$ is a $C_{1-8}$ alkyl or $C_{2-20}$ acyl group; k is an integer from 1 to 60; each p, p', q and q' is an integer from 0 to 6, provided that $1 \leq p+q \leq 6$ and $1 \leq p'+q' \leq 6$; and each r and r' is an integer from 0 to 7, provided that $1 \leq r+r' \leq 7$.

2. A resin composition comprising a resin and the resin plasticizer of claim 1.

3. The resin composition according to claim 2 comprising the resin plasticizer in a proportion of about 1 to about 300 parts by weight per 100 parts by weight of resin.

4. The resin composition according to claim 2, wherein the resin is at least one thermoplastic resin selected from the group consisting of polyesters, polyolefins, polyamides, polyacetals, vinyl-based resins, styrene-based resins, acryl-based resins, and cellulose-based resins.

5. The resin composition according to claim 4, wherein the resin is a polyester.

6. The resin composition according to claim 5, wherein the polyester is a polylactic acid-based resin.

7. A molded article produced by molding the resin composition of claim 2.

8. A resin plasticizer comprising a reaction product obtained by reacting (a) a hydroxycarboxylic acid with (b) a compound represented by Formula (2):

$$\text{HO-}[(CHR^3)_p(CHR^4)_q\text{-O}]_r((CHR^5)_{p'}(CHR^6)_{q'}\text{-O}]_{r'}\text{-R}^7$$

wherein each $R^3$, $R^4$, $R^5$ and $R^6$ is independently a hydrogen atom or a methyl group; $R^7$ is a $C_{1-8}$ alkyl or $C_{2-20}$ acyl group; each p, p', q and q' is an integer from 0 to 6, provided that $1 \leq p+q \leq 6$ and $1 \leq p'+q' \leq 6$; and each r and r' is an integer from 0 to 7, provided that $1 \leq r+r' \leq 7$; and optionally reacting the product of the reaction between (a) and (b) with (c) a $C_{2-20}$ carboxylic acid.

9. The resin plasticizer according to claim 8, wherein Ingredient (a) is at least one member selected from the group consisting of glycolic acid, oligomers of glycolic acid, lactic acid, oligomers of lactic acid, and heterooligomers of glycolic acid and lactic acid.

10. The resin plasticizer according to claim 8, wherein Ingredient (b) is at least one member selected from the group consisting of triethylene glycol monomethyl ether, triethylene glycol monoethyl ether, triethylene glycol monopropyl ether, triethylene glycol monobutyl ether, and tripropylene glycol monomethyl ether.

11. The resin plasticizer according to claim 8, wherein Ingredient (c) is at least one $C_{2-11}$ aliphatic carboxylic acid.

12. A resin composition comprising a resin and the resin plasticizer of claim 8.

13. The resin composition according to claim 12 comprising the resin plasticizer in a proportion of about 1 to about 300 parts by weight per 100 parts by weight of resin.

14. The resin composition according to claim 12, wherein the resin is at least one thermoplastic resin selected from the group consisting of polyesters, polyolefins, polyamides, polyacetals, vinyl-based resins, styrene-based resins, acryl-based resins, and cellulose-based resins.

15. The resin composition according to claim 14, wherein the resin is a polyester.

16. The resin composition according to claim 15, wherein the polyester is a polylactic acid-based resin.

17. A molded article produced by molding the resin composition of claim 12.

18. A resin plasticizer comprising a reaction product obtained by reacting (a) a hydroxycarboxylic acid with (c) a $C_{2-20}$ carboxylic acid; and then reacting the product of the reaction between (a) and (c) with (b) a compound represented by Formula (2) :

$$\text{HO-}[(CHR^3)_p(CHR^4)_q\text{-O}]_r[(CHR^5)_{p'}(CHR^6)_{q'}\text{-O}]_{r'}\text{-R}^7$$

wherein each $R^3$, $R^4$, $R^5$ and $R^6$ is independently a hydrogen atom or a methyl group; $R^7$ is a $C_{1-8}$ alkyl or $C_{2-20}$ acyl group; each p, p', q and q' is an integer from 0 to 6, provided that $1 \leq p+q \leq 6$ and $1 \leq p'+q' \leq 6$; and each r and r' is an integer from 0 to 7, provided that $1 \leq r+r' \leq 7$.

<table>
<tr><td colspan="2" align="center">**INTERNATIONAL SEARCH REPORT**</td><td colspan="2">International application No.<br>PCT/JP2004/000885</td></tr>
</table>

**A. CLASSIFICATION OF SUBJECT MATTER**
Int.Cl$^7$ C08L101/00, 101/16, 67/04, C08K5/10

According to International Patent Classification (IPC) or to both national classification and IPC

**B. FIELDS SEARCHED**

Minimum documentation searched (classification system followed by classification symbols)
Int.Cl$^7$ C08L101/00, 101/16, 67/04, C08K5/10

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 60-40162 A (Daicel Chemical Industries, Ltd.),<br>02 March, 1985 (02.03.85),<br>Full text<br>(Family: none) | 1-18 |
| A | JP 2002-293899 A (Daicel Chemical Industries, Ltd.),<br>09 October, 2002 (09.10.02),<br>Full text<br>(Family: none) | 1-18 |
| A | JP 8-198957 A (Takasago International Corp.),<br>06 August, 1996 (06.08.96),<br>Full text<br>& EP 723983 A2 & DE 69614279 D<br>& US 5824751 A1 | 1-18 |

☒ Further documents are listed in the continuation of Box C.　　☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>15 April, 2004 (15.04.04) | Date of mailing of the international search report<br>11 May, 2004 (11.05.04) |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2004/000885

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-316846 A  (Sanyo Chemical Industries, Ltd.), 02 December, 1998 (02.12.98), Full text (Family: none) | 1-18 |
| A | JP 7-118513 A  (Dainippon Ink And Chemicals, Inc.), 09 May, 1995 (09.05.95), Full text (Family: none) | 1-18 |
| A | JP 6-306264 A  (Mitsui Toatsu Chemicals, Inc.), 01 November, 1994 (01.11.94), Full text (Family: none) | 1-18 |
| A | JP 11-181262 A  (Shimadzu Corp.), 06 July, 1999 (06.07.99), Full text (Family: none) | 1-18 |
| A | JP 9-31172 A  (Kyowa Yuka Co., Ltd.), 04 February, 1997 (04.02.97), Full text (Family: none) | 1-18 |
| A | JP 11-322907 A  (Kuraray Co., Ltd.), 26 November, 1999 (26.11.99), Full text (Family: none) | 1-18 |

Form PCT/ISA/210 (continuation of second sheet) (January 2004)